Europäisches Patentamt

European Patent Office

Office européen des brevets

(11) Veröffentlichungsnummer: **0 380 941**
**A2**

## (12) EUROPÄISCHE PATENTANMELDUNG

(21) Anmeldenummer: 90100571.0

(22) Anmeldetag: **12.01.90**

(51) Int. Cl.5: **B60S 9/04, B65D 90/14**

(30) Priorität: **29.01.89 DE 3902613**

(43) Veröffentlichungstag der Anmeldung:
**08.08.90 Patentblatt 90/32**

(84) Benannte Vertragsstaaten:
**BE CH DE FR GB IT LI NL**

(71) Anmelder: **Jost-Werke GmbH**
**Siemensstrasse 2**
**D-6078 Neu Isenburg(DE)**

(72) Erfinder: **Dreyer, Hans**
**Wolfgang-Borchert-Strasse 13**
**D-6073 Egelsbach-Bayerseich(DE)**
Erfinder: **Müller, Gerald**
**Wilhelm-Leuschner-Strasse 58**
**D-6054 Rodgau 5(DE)**

(74) Vertreter: **Köhler, Günter, Dipl.-Ing.**
**Nordring 1**
**D-6458 Rodenbach(DE)**

(54) **Teleskop-Stützvorrichtung.**

(57) Eine Teleskop-Stützvorrichtung, insbesondere für Sattelanhänger, hat wenigstens ein teleskopierbares Stützbein (1), das ein Außenrohr (2) und darin ein nach unten ausfahrbares erstes Innenrohr (3a) sowie eine mit dem Außenrohr (2) verbundene Befestigungsplatte (13) zum Befestigen des Stützbeins (1) an dem abzustützenden Gegenstand aufweist.

Zur Gewichtsverringerung und Vereinfachung der Herstellung ist das Außenrohr (2) einteilig mit der Befestigungsplatte (13) im Strangpreßverfahren aus Leichtmetall, insbesondere einer Aluminiumlegierung, hergestellt und mit Längsrippen (11) auf der Innenseite versehen.

FIG.4

EP 0 380 941 A2

Die Erfindung bezieht sich auf eine Teleskop-Stützvorrichtung, insbesondere für Sattelanhänger, mit wenigstens einem teleskopierbaren Stützbein, das ein Außenrohr und darin ein nach unten ausfahrbares erstes Innenrohr sowie eine mit dem Außenrohr verbundene Befestigungsplatte zum Befestigen des Stützbeins an dem abzustützenden Gegenstand aufweist.

Derartige Teleskop-Stützvorrichtungen, auch Stützwinden genannt, werden vornehmlich für Sattelanhänger, aber auch für Container verwendet.

Bei einer bekannten Teleskop-Stützvorrichtung der gattungsgemäßen Art (Prospekt "Jost Teleskop-Stützvorrichtung, Baureihe HD 200T und HD 240T, Juni 1987") sind das Außen- und das Innenrohr glatte Vierkantrohre. Die zur Befestigung des Stützbeins am Fahrgestell eines Sattelanhängers dienende Befestigungsplatte ist an der Außenseite der einen Seitenwand des Außenrohres angeschweißt. Seitlich vom Aussenrohr abstehende Wandbereiche der Befestigungsplatte sind mit Löchern zur Durchführung von Befestigungsschrauben versehen. Die Außen- und Innenrohre bestehen zur Erzielung einer hohen Festigkeit aus Stahl. Dementsprechend haben sie ein verhältnismäßig hohes Gewicht.

Der Erfindung liegt die Aufgabe zugrunde, eine Teleskop-Stützvorrichtung der gattungsgemäßen Art anzugeben, deren Gewicht bei gleicher Belastbarkeit geringer oder deren Belastbarkeit bei gleichem Gewicht höher ist.

Erfindungsgemäß ist diese Aufgabe dadurch gelöst, daß das Außenrohr Längsrippen aufweist.

Bei dieser Ausbildung sorgen die Längsrippen für eine Versteifung des Außenrohres, so daß es ein höheres Widerstandsmoment gegen eine Durchbiegung oder Knickung bei gleichem Materialaufwand, oder umgekehrt, aufweist.

Vorzugsweise sind die Längsrippen auf der Innenseite des Außenrohres vorgesehen. Dies ergibt eine definiertere Berührungsfläche zwischen Außen- und Innenrohr. Zwischen den Rippen kann sich Schmutz ablagern, der sonst bei großflächiger Berührung zwischen Innen- und Außenrohr zu Schwergängigkeit führen kann.

Ein Teil der Befestigungsplatte kann einen Teil der Wand des Außenrohres bilden. Dies ergibt eine einteilige Ausbildung von Befestigungsplatte und Außenrohr. Beide lassen sich in einem Arbeitsgang herstellen. Bei dennoch hinreichender Festigkeit ist der Materialaufwand geringer als bei am Außenrohr angeschweißter Befestigungsplatte.

Vorzugsweise ist der einen Teil der Wand des Außenrohres bildende Teil der Befestigungsplatte frei von Längsrippen. Hierbei gewährleisten außerhalb der Wand des Außenrohres liegende Randbereiche der Befestigungsplatte, daß auch der von Längsrippen freie Wandteil des Außenrohres eine hinreichende Biegefestigkeit aufweist, da die vom Außenrohr abstehenden Randbereiche der Befestigungsplatte zum einen in der mit ihrer Ebene zusammenfallenden Biegerichtung selbst wie versteifende Rippen wirken und zum anderen in einer hierzu senkrechten Biegerichtung aufgrund ihres zusätzlichen Materials die Biegesteifigkeit jenes Wandteils erhöhen.

Auch das Innenrohr kann auf seiner Außen- und/oder Innenseite Längsrippen aufweisen. Dies führt zu einer noch weiteren Steigerung der Biegefestigkeit des Stützbeins bei gleichem Materialaufwand oder zu einer Verringerung des Materialaufwands bei gleicher Biegefestigkeit.

Das gleiche gilt, wenn ein zweites nach unten ausfahrbares Innenrohr in dem ersten Innenrohr angeordnet und auf einer Außen- und/oder Innenseite mit Längsrippen versehen ist.

Vorzugsweise ist wenigstens eines der Innenrohre auf wenigstens der Außenseite seines auf seiten der Befestigungsplatte liegenden Wandteils frei von Längsrippen. Dies führt bei hinreichender Festigkeit der Rohre aufgrund ihrer Versteifung durch die Längsrippen zu einem Raumgewinn im Inneren der Rohre für die Unterbringung von Getriebezahnrädern, Lagerteilen und einer Gewindespindel.

Ferner können die Längsrippen auf den einander zugewandten Seiten der Rohre ineinandergreifen. Auch dies trägt zu einem Raumgewinn im Inneren der Rohre bei und erhöht die Gesamtfestigkeit, da sich die Rippen gleichzeitig gegenseitig abstützen, und verbessert die Führung der Rohre relativ zueinander.

Ferner kann wenigstens das Außenrohr aus einem spezifisch leichteren Werkstoff als Stahl bestehen. Dies führt zu einer Verringerung des Gewichts, bei dennoch hinreichender Festigkeit aufgrund der Längsrippen.

Der Werkstoff kann Aluminium oder Kunststoff aufweisen, vorzugsweise eine Aluminiumlegierung.

Hierbei kann die Herstellung der Rohre, gegebenenfalls zusammen mit der einteilig mit dem Außenrohr ausgebildeten Befestigungsplatte, auf einfache Weise im Strang- oder Spritzgußverfahren erfolgen. Diese Herstellungsverfahren erlauben ferner die Einhaltung engerer Maßtoleranzen, so daß die Rohre mit geringerem Spiel teleskopierbar sind.

Sodann ist es günstig, wenn zwischen seitlich vom Außenrohr abstehenden Randbereichen der einteilig mit dem Außenrohr im Strang- oder Spritzgußverfahren hergestellten Befestigungsplatte und dem Außenrohr ein Übergangsradius ausgebildet ist. Dieser Übergangsradius ergibt einen harmonischen Übergang und stellt gegenüber einer Schweißnaht, neben dem gefälligeren Aussehen, eine gleichbleibende Festigkeit aufgrund der Vermeidung eventueller Schweißfehler sicher.

Die Erfindung und ihre Weiterbildungen werden nachstehend anhand der Zeichnung bevorzugter Ausführungsbeispiele näher beschrieben. Es zeigen:

Fig. 1 eine Vorderansicht einer erfindungsgemäßen Teleskop-Stützvorrichtung mit zwei gemeinsam angetriebenen Stützbeinen,

Fig. 2 eine Seitenansicht der Teleskop-Stützvorrichtung nach Fig. 1 in zwei verschiedenen Betriebsstellungen,

Fig. 3 den Schnitt III-III der Fig. 1,

Fig. 4 eine Draufsicht auf ein Stützbein der Teleskop-Stützvorrichtung nach Fig. 1 bei abgenommener Abdeckung und Getriebeeinrichtung,

Fig. 5 eine Draufsicht auf ein abgewandeltes Stützbein der Teleskop-Stützvorrichtung nach Fig. 1 bei abgenommener Abdeckung und Getriebeeinrichtung,

Fig. 6 eine Draufsicht auf eine weitere Abwandlung eines Stützbeins der Teleskop-Stützvorrichtung nach Fig. 1 bei abgenommener Abdeckung und Getriebeeinrichtung,

Fig. 7 einen Ausschnitt einer Seitenansicht einer weite ren Abwandlung eines ausgefahrenen Stützbeins der Teleskop-Stützvorrichtung nach Fig. 1,

Fig. 8 eine andere Seitenansicht des Stützbeins nach Fig. 7,

Fig. 9 eine Draufsicht des Stützbeins nach Fig. 7 bei abgenommener Abdeckung und Getriebeeinrichtung,

Fig. 10 einen Ausschnitt einer Seitenansicht einer weiteren Abwandlung eines ausgefahrenen Stützbeins der Teleskop-Stützvorrichtung nach Fig. 1,

Fig. 11 einen Ausschnitt einer anderen Seitenansicht des Stützbeins nach Fig. 10,

Fig. 12 eine Draufsicht des Stützbeins nach Fig. 10 bei abgenommener Abdeckung und Getriebeeinrichtung,

Fig. 13 einen Ausschnitt einer Seitenansicht einer weiteren Abwandlung eines ausgefahrenen Stützbeins der Teleskop-Stützvorrichtung nach Fig. 1,

Fig. 14 einen Ausschnitt einer anderen Seitenansicht des Stützbeins nach Fig. 13 und

Fig. 15 eine Draufsicht des Stützbeins nach Fig. 13 bei abgenommener Abdeckung und Getriebeeinrichtung.

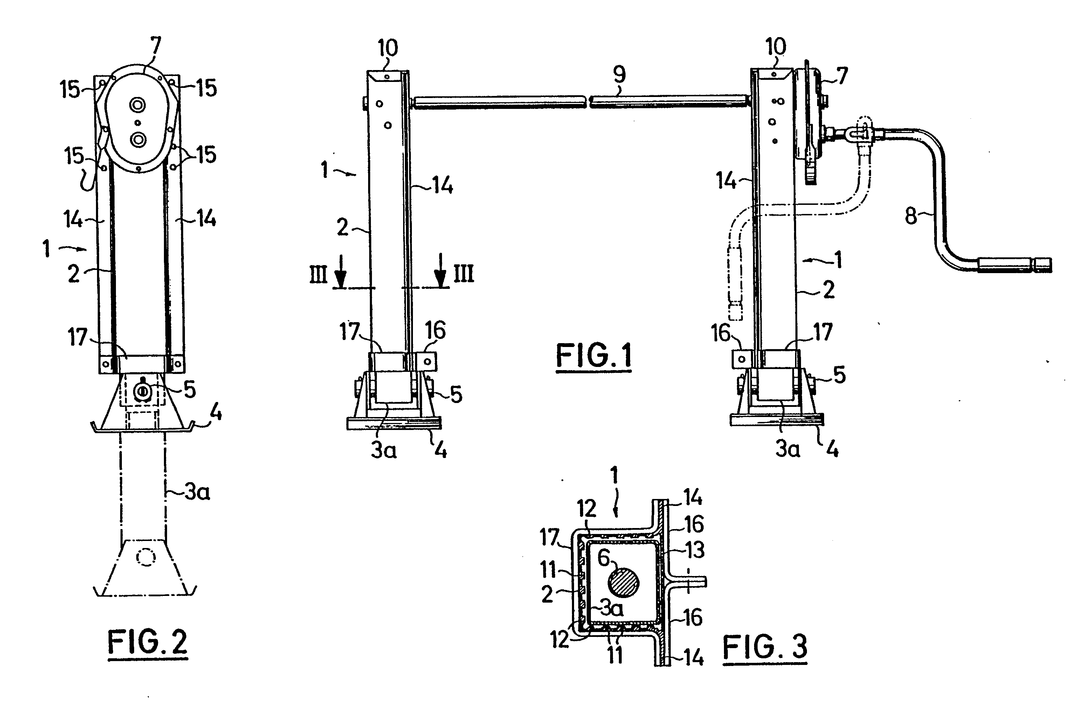

Die Teleskop-Stützvorrichtung nach den Fig. 1 bis 4 hat zwei teleskopierbare Stützbeine 1, die im wesentlichen gleich ausgebildet sind. Jedes Stützbein 1 hat ein vierkantiges Außenrohr 2 und ein darin axial verschiebbar geführtes vierkantiges Innenrohr 3a. Am unte ren Ende jedes Innenrohres 3a ist ein Stützfuß 4 in Form eines Stütztellers um einen Gelenkbolzen 5 schwenkbar gelagert. Jedes Stützbein 1 enthält ferner eine Spindel 6 (Fig. 3), die über ein Zahnrad-Getriebe 7 und weitere im Inneren jedes Stützbeins 1 enthaltene Kegelräder mittels einer Handkurbel 8 antreibbar ist und in eine mit dem Innenrohr 3a drehfest verbundene (nicht dargestellte) Mutter eingreift. Hierbei sind zwei der im Inneren der Stützbeine 1 enthaltenen Kegelräder durch eine Welle 9 verbunden, so daß die Innenrohre 3a beider Stützbeine 1 gemeinsam antreibbar sind. Oben sind die Außenrohre 2 jeweils durch eine Abdeckung 10 verschlossen. Die Außen-und Innenrohre 2, 3a sind im Strangpreßverfahren aus einer Aluminiumlegierung hergestellt. Sie können aber auch im Spritzgußverfahren hergestellt sein. Alternativ können sie aus Kunststoff, insondere faserverstärktem Kunststoff, im Spritzgußverfahren hergestellt sein. Ferner ist es möglich, sie aus gewalzten Profilen in Form einer Schweißverbundkonstruktion herzustellen. Ebenso wäre die Herstellung aus Stahl möglich.

Jedes Außenrohr 2 ist außen glatt und auf den Innenseiten von drei seiner vier Seitenwände mit Längsrippen 11, 12 versehen, die trotz des verwendeten Leichtmetalls und des dementsprechend geringeren Gewichts der Außenrohre 2 für eine hinreichende Biegefestigkeit sorgen. Die nicht mit Längsrippen versehene Seitenwand jedes Außenrohres 2 bildet zugleich einen Teil einer Befestigungsplatte 13 zum Befestigen des Stützbeins 1 an der Außenseite des Fahrgestells eines Sattelanhängers oder der Außenseite eines Containers. Zu diesem Zweck hat die Befestigungsplatte 13 seitlich vorstehende Randbereiche 14, die mit Bohrungen 15 zur Durchführung von Befestigungsschrauben versehen sind. Die Übergänge vom Außenrohr 2 zu den Randbereichen 14 sind jeweils mit einem Übergangsradius versehen. Am unteren Ende jedes Außenrohres 2 sind abgewinkelte Verstrebungsbänder 16, 17 befestigt.

Die Innenrohre 3a sind außen und innen glatt und ebenfalls aus Leichtmetall, wie einer Aluminiumlegierung, oder faserverstärktem Kunststoff hergestellt. Sie können daher ebenfalls im Strangpreß- bzw. Spritzgußverfahren hergestellt sein. Desgleichen ist die Herstellung auf Stahl möglich.

Die Längsrippen 11 haben einen etwa rechtwinkligen Querschnitt und gehen mit einem Übergangsradius in den Boden der zwischen ihnen liegenden Längsnuten über. Die äußeren Ecken er Innenrohre 3a sind hierbei jeweils einer Längsnut zugekehrt und berühren daher die Innenseiten der Außenrohre 2 nicht.

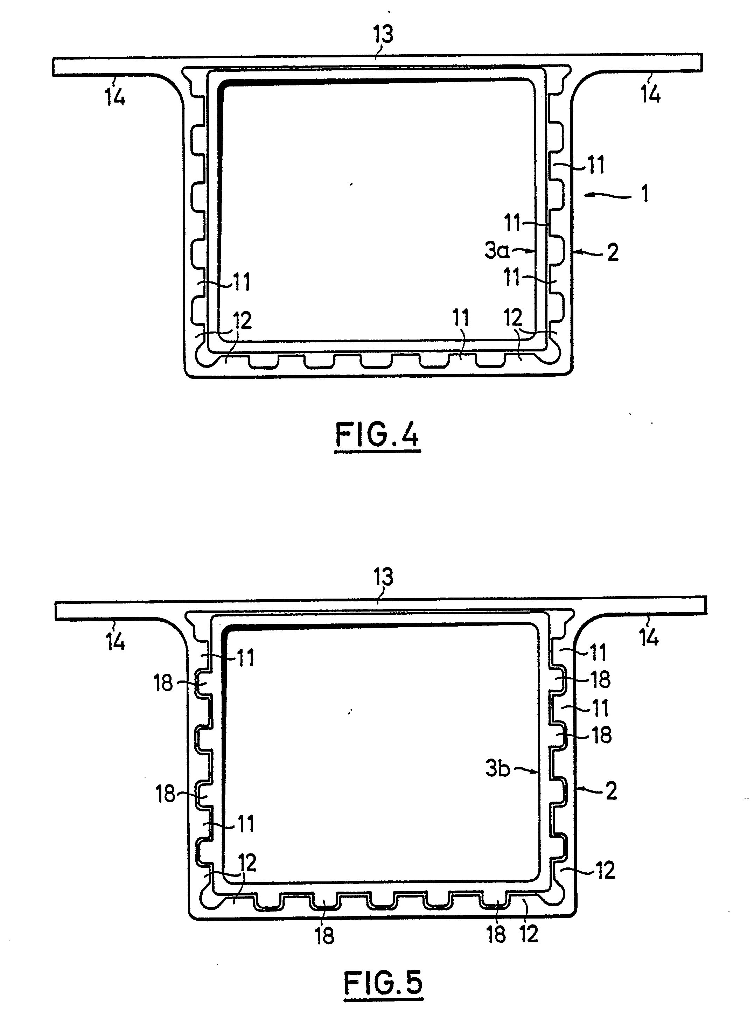

Bei der Abwandlung nach Fig. 5 ist das Außenrohr 2 unverändert. Das Innenrohr 3b ist jedoch nur auf der Außenseite seiner den gerippten Seitenwänden des Außenrohres 2 benachbarte Seitenwänden mit Längsrippen 18 versehen, die sich über die gesamte Länge des Innenrohres 3b erstrecken und in die Längsnuten zwischen den Längsrippen 11 des Außenrohres 2 eingreifen, wobei sie der Form dieser Längsnuten im Querschnitt weitgehend angepaßt sind. Die der einen Teil der Befestigungsplatte 13 bildenden Seitenwand benachbarte Seitenwand des Innenrohres 3b ist dagegen frei von Längsrippen, ebenso wie die gesamte Innenseite des Innenrohres 3b. Die Längsrippen 18 des Innenrohres 3b bewirken eine Versteifung des Innenrohres 3b, wobei weiterhin der gleiche Innenraum wie bei der Ausführungsform nach Fig. 4 zur Verfügung steht. Die Herstellung des Innenrohres 3b kann aus dem gleichen Material und in der gleichen Weise wie die des Außenrohres 2 erfolgen.

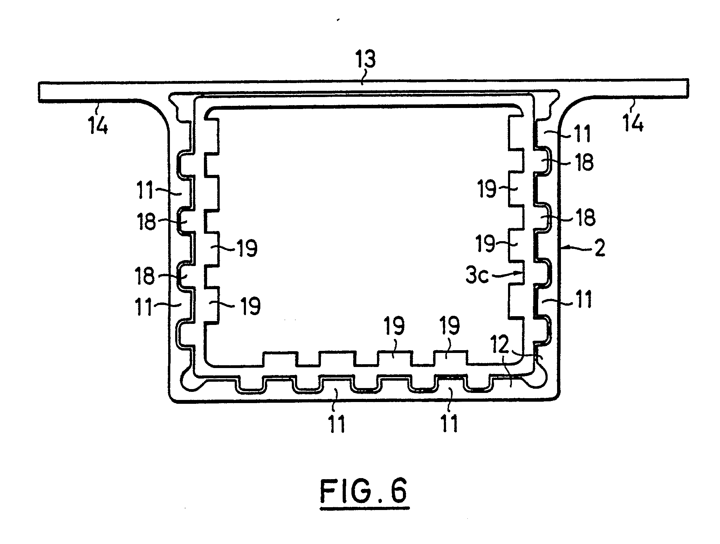

Die Abwandlung nach Fig. 6 unterscheidet sich von der nach Fig. 5 lediglich dadurch, daß die auf der Außenseite mit Längsrippen 18 versehenen Seitenwände des Innenrohres 3c auch auf der Innenseite mit Längsrippen 19 versehen sind, wobei jede Längsnut zwischen den Längsrippen 19 jeweils einer Längsnut zwischen den Längsrippen 18 gegenüberliegt und die gleiche Breite wie diese aufweist. Diese Ausbildung ergibt eine noch höhere Biegesteifigkeit des Innenrohres 3c.

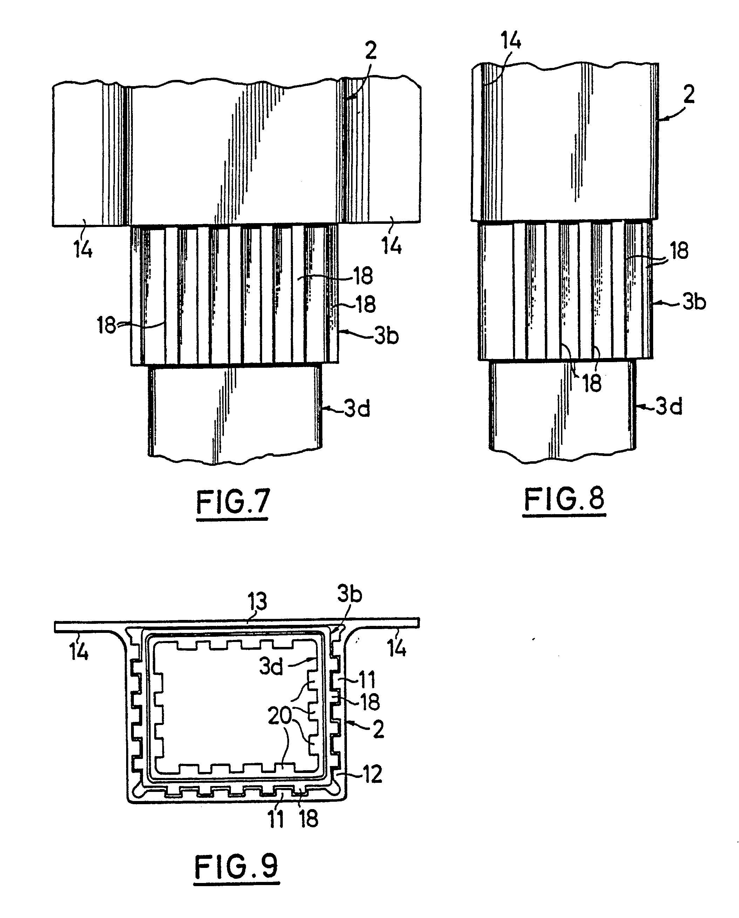

Die Abwandlung nach den Fig. 7 bis 9 unterscheidet sich von der nach Fig. 5 lediglich dadurch, daß ein zweites Innenrohr 3d in dem ersten Innenrohr 3b axial verschiebbar geführt und nur auf den Innenseiten aller seiner vier Seitenwände mit Längsrippen 20 versehen ist. Auch diese Längsrippen erstrecken sich über die gesamte Länge des zweiten Innenrohres 3d. Das zweite Innenrohr 3d ist aus dem gleichen Material wie das Außenrohr 2 und das erste Innenrohr 3b und nach dem gleichen Verfahren hergestellt. Es steht nicht mit der Spindel 6 in Verbindung, sondern wird als Fallrohr betrieben, d.h. es ist in der in das erste Innenrohr 3b eingefahrenen Position mittels eines Sicherungsbolzens in der oberen Endlage gesichert und wird zum Ausfahren entsichert, wobei es dann bis in die untere Endlage herabfällt, in der es dann wieder durch einen Sicherungsbolzen gesichert wird. Das Einfahren bzw. Anheben des Innenrohres 3d geschieht von Hand.

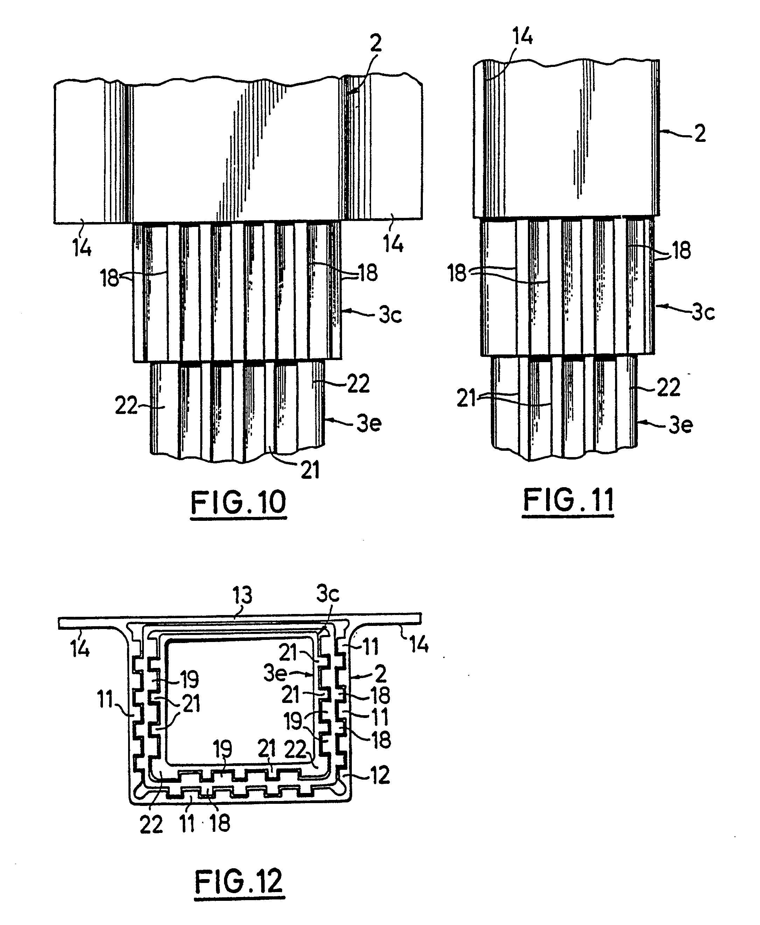

Die Ausführungsform nach den Fig. 10 bis 12 unterscheidet sich von der nach Fig. 6 durch die Verwendung eines zweiten Innenrohres 3e mit sich über dessen gesamte Länge nur auf den Außenseiten dreier Seitenwände erstreckenden Längsrippen 21 und 22, die in die Längsnuten zwischen einander benachbarten Längsrippen 19 auf der Innenseite des ersten Innenrohres 3c eingreifen und der Querschnittsform dieser Längsnuten weitgehend angepaßt sind. Auch dieses zweite Innenrohr 3e ist ein Fallrohr, das ebenso hergestellt ist wie die beiden Rohre 2 und 3c.

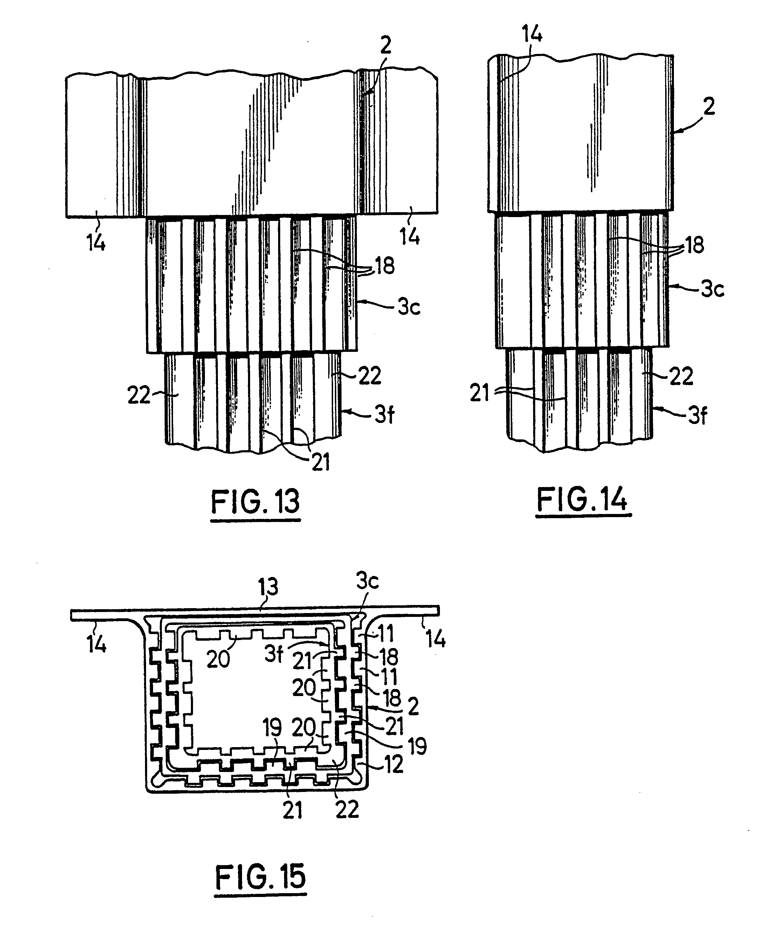

Das Ausführungsbeispiel nach den Fig. 13 bis 15 unterscheidet sich von dem nach den Fig. 10 bis 12 nur dadurch, daß das zweite Innenrohr 3f auch auf der Innen seite aller vier Seitenwände mit über die gesamte Länge durchgehenden Längsrippen 20 versehen ist.

Eine weitere Abwandlung kann beispielsweise darin bestehen, daß die Rohre nicht vierkantig, sondern zylindrisch ausgebildet sind.

## Ansprüche

1. Teleskop-Stützvorrichtung, insbesondere für Sattelanhänger, mit wenigstens einem teleskopierbaren Stützbein, das ein Außenrohr und darin ein nach unten ausfahrbares erstes Innenrohr sowie eine mit dem Außenrohr verbundene Befestigungsplatte zum Befestigen des Stützbeins an dem abzustützenden Gegenstand aufweist, **dadurch gekennzeichnet,** daß das Außenrohr (2) Längsrippen (11) aufweist.

2. Teleskop-Stützvorrichtung nach Anspruch 1, **dadurch gekennzeichnet,** daß die Längsrippen (11) auf der Innenseite des Außenrohres (2) vorgesehen sind.

3. Teleskop-Stützvorrichtung nach Anspruch 1 oder 2, **dadurch gekennzeichnet,** daß ein Teil der Befestigungsplatte (13) einen Teil der Wand des Außenrohres (2) bildet.

4. Teleskop-Stützvorrichtung nach Anspruch 3, **dadurch gekennzeichnet,** daß der einen Teil der Wand des Außenrohres (2) bildende Teil der Befestigungsplatte (13) frei von Längsrippen (11) ist.

5. Teleskop-Stützvorrichtung nach einem der Ansprüche 1 bis 4, **dadurch gekennzeichnet,** daß das erste Innenrohr (3b; 3c) auf seiner Außen- und/oder Innenseite Längsrippen (18; 19) aufweist.

6. Teleskop-Stützvorrichtung nach einem der Ansprüche 1 bis 5, **dadurch gekennzeichnet,** daß ein zweites nach unten ausfahrbares Innenrohr (3d; 3e; 3f) in dem ersten Innenrohr (3b; 3c) angeordnet und auf seiner Außen- und/oder Innenseite mit Längsrippen (20 - 22) versehen ist.

7. Teleskop-Stützvorrichtung nach Anspruch 5 oder 6, **dadurch gekennzeichnet,** daß wenigstens eines der Innenrohre (3b - 3f) auf wenigstens der Außenseite seines auf seiten der Befestigungsplatte (13) liegenden Wandteils frei von Längsrippen ist.

8. Teleskop-Stützvorrichtung nach einem der Ansprüche 5 bis 7, **dadurch gekennzeichnet,** daß die Längsrippen (11, 18, 19, 21, 22) auf den einander zugewandten Seiten der Rohre (3a - 3c, 3e, 3f) ineinandergreifen.

9. Teleskop-Stützvorrichtung nach einem der Ansprüche 1 bis 8, **dadurch gekennzeichnet,** daß wenigstens das Außenrohr (2) aus einem spezifisch leichteren Werkstoff als Stahl besteht.

10. Teleskop-Stützvorrichtung nach Anspruch 9, **dadurch gekennzeichnet,**
daß der Werkstoff Aluminium oder Kunststoff aufweist.

11. Teleskop-Stützvorrichtung nach Anspruch 10, **dadurch gekennzeichnet,**
daß die Rohre (3a - 3f) im Strang- oder Spritzgußverfahren hergestellt sind.

12. Teleskop-Stützvorrichtung nach den Ansprüchen 3 und 11, **dadurch gekennzeichnet,**
daß zwischen seitlich vom Außenrohr (2) abstehenden Randbereichen (14) der einteilig mit dem Außenrohr (2) im Strang- oder Spritzgußverfahren hergestellten Befestigungsplatte (13) und dem Außenrohr (2) ein Übergangsradius ausgebildet ist.

**FIG.2**

**FIG.1**

**FIG.3**

EP 0 380 941 A2

FIG.4

FIG.5

FIG.6

FIG.7

FIG.8

FIG.9

FIG.10

FIG.11

FIG.12

FIG. 13

FIG. 14

FIG. 15